(19) **Europäisches Patentamt / European Patent Office / Office européen des brevets**

(11) **EP 1 216 123 B2**

(12) **NOUVEAU FASCICULE DE BREVET EUROPEEN**

Après la procédure d'opposition

(45) Date de publication et mention de la décision concernant l'opposition:
**25.04.2012 Bulletin 2012/17**

(45) Mention de la délivrance du brevet:
**19.11.2003 Bulletin 2003/47**

(21) Numéro de dépôt: **00964369.3**

(22) Date de dépôt: **26.09.2000**

(51) Int Cl.:
**B27K 7/00** (2006.01)

(86) Numéro de dépôt international:
**PCT/FR2000/002653**

(87) Numéro de publication internationale:
**WO 2001/023155 (05.04.2001 Gazette 2001/14)**

(54) **PROCEDE DE TRAITEMENT ET D'EXTRACTION DE COMPOSES ORGANIQUES DU LIEGE, PAR UN FLUIDE DENSE SOUS PRESSION**

**VERFAHREN ZUR BEHANDLUNG VON KORK UND EXTRAKTION VON ORGANISCHEN VERBINDUNGEN AUS KORK MIT EINEM DICHTEN FLUID UNTER DRUCK**

**METHOD FOR TREATING CORK AND EXTRACTING ORGANIC COMPOUNDS FROM CORK, WITH A DENSE FLUID UNDER PRESSURE**

(84) Etats contractants désignés:
**AT BE CH CY DE DK ES FI FR GB GR IE IT LI LU MC NL PT SE**
Etats d'extension désignés:
**RO**

(30) Priorité: **27.09.1999 FR 9912003**

(43) Date de publication de la demande:
**26.06.2002 Bulletin 2002/26**

(73) Titulaires:
- **Commissariat à l'Énergie Atomique et aux Énergies Alternatives**
  **75015 Paris (FR)**
- **DIAM BOUCHAGE**
  **66400 Ceret (FR)**

(72) Inventeurs:
- **LUMIA, Guy**
  **F-30130 Pont Saint-Esprit (FR)**
- **PERRE, Christian**
  **F-26700 Pierrelatte (FR)**
- **ARACIL, Jean-Marie**
  **F-66500 Taurinya (FR)**

(74) Mandataire: **Dossmann, Gérard et al**
**Casalonga & Partners**
**Bayerstrasse 71-73**
**80335 München (DE)**

(56) Documents cités:
**EP-A- 0 395 010     WO-A-98/16288**
**FR-A- 2 597 778     US-A- 5 364 475**

- **CHEMICAL ABSTRACTS, vol. 126, no. 8, 24 février 1997 (1997-02-24) Columbus, Ohio, US; abstract no. 101255, MIRANDA, ANA M. ET AL: "High - pressure extraction of cork with CO2 and 1,4 -dioxane" XP002140558 & PROCESS TECHNOL. PROC. (1996), 12(HIGH PRESSURE CHEMICAL ENGINEERING), 417-422, 1996,**
- **CHEMICAL ABSTRACTS, vol. 91, no. 21, 19 novembre 1979 (1979-11-19) Columbus, Ohio, US; abstract no. 173344, GARCIA DEL RIO, J. R.: "Use of sulfur dioxide and ethylene oxide in disinfection of corks" XP002140559 & SEM. VITIVINIC. (1979), 34(1.712), 945, 947, 949, 1979,**
- **D. CHOUCHI: 'SFE of Trichloroanisole from Cork' SENDAI JAPAN 11 Mai 1997 - 14 Mai 1997, JAPAN,**

Remarques:
Le dossier contient des informations techniques présentées postérieurement au dépôt de la demande et ne figurant pas dans le présent fascicule.

**Description**

La présente invention est relative à un procédé de traitement, d'extraction de composés organiques du liège par un fluide dense sous pression, en particulier par un fluide supercritique, ledit fluide étant du dioxyde de carbone.

Le liège est un matériau naturel, imperméable et léger, qui provient de l'écorce de certaines espèces de chênes, tels que le chêne liège, qui se rencontrent, pour la plupart, dans les pays du pourtour méditerranéen, en Europe et au Maghreb.

Le liège trouve notamment son utilisation dans la fabrication de bouchons, qui servent à boucher des récipients, tels que des bouteilles contenant des liquides destinés à l'alimentation, en particulier du vin.

Le bouchon de liège est utilisé pour boucher des bouteilles de vin depuis de très nombreuses années.

Chaque année, quinze milliards de bouteilles environ sont bouchées de cette manière partout dans le monde.

Le liège est en effet un produit naturel qui a des propriétés particulièrement bien adaptées à la conservation du vin en bouteilles. Le liège est élastique, résilient, compressible, présente un fort coefficient de friction, est imperméable aux liquides, avec une perméabilité suffisante aux gaz pour permettre un échange nécessaire à la maturation du produit en bouteille.

Cependant, occasionnellement, certaines altérations de l'odeur et/ou du goût du liquide conservé, tel que le vin, viennent compromettre la cohérence du couple naturel formé par le liège et le vin.

Ces altérations sont regroupées sous le terme générique de « goût de bouchon ».

Il a été démontré que la majorité d'entre elles sont totalement indépendantes du bouchon et trouvent leur origine dans le vin lui-même ou dans sa préparation ou son stockage.

Toutefois, les autres altérations proviennent du bouchon et de très nombreux travaux ont été réalisés partout dans le monde pour rechercher l'origine du problème et pour le résoudre.

Il a ainsi été déterminé que les goûts de bouchon pouvaient être globalement répartis en goûts de bouchon « vrais », en goûts de liège, et enfin en goûts de moisi.

Le goût de bouchon « vrai » est un goût putride, rendant le vin inconsommable. Ce défaut est associé à la tache jaune, c'est-à-dire à la croissance d'un champignon supérieur, l'Armillaria mellea.

Les planches de liège atteints de tache jaune sont normalement écartées lors du premier tri de sélection des planches de liège.

La fréquence de ce défaut serait de l'ordre de 1 pour 10 000 à 1 pour 100 000.

Le goût de liège provient du fait que le liège n'est pas inerte vis-à-vis du vin. Il apporte, dans des proportions variables, des composants aromatiques, qui peuvent interagir avec le vin, soit de manière positive, soit de manière négative.

La présence de goûts indésirables plus ou moins accentués est associée à la préparation du liège, notamment à la durée de stockage sur parc et aux conditions de bouillage.

Le respect du Code International des Pratiques Bouchonnières permet de minimiser la fréquence de ces goûts.

La confusion est très souvent faite entre « goût de bouchon » et goût de moisi. Les goûts de moisi sont des goûts de type champignons, sous-bois et moisi reliés à la présence de molécules organiques, dont les plus souvent citées sont : le méthyl-isobornéol et ses dérivés à l'odeur « moisie et camphrée », la géosmine à odeur « terreuse », la méthylthio-éthyl-pyrazine à odeur « moisie et sulfurée », les alcools et cétones insaturées en $C_8$ à odeur « champignonnée » et surtout les chloroanisoles, plus particulièrement le 2,3,4,6-TeCA2,4,6-TCA (trichloroanisole) et le 2,3,4,6-TeCA (tétrachloroanisole).

Ces chloroanisoles, qui sont très odorants et dont le seuil de perception dans l'eau se situe entre 0,03 et 4 ng/l, proviennent de la méthylation des chlorophénols peu volatils et très peu odorants. Cette réaction est effectuée par un très grand nombre de moisissures et correspond à une réaction de détoxification des chlorophénols.

Les précurseurs de type chlorophénols peuvent avoir des origines diverses et provenir de produits phytosanitaires, de traitements insecticides, de pollutions atmosphériques, de réactions de dégradations du liège, faisant suite, par exemple, à certaines opérations de lavage par de l'hypochlorite.

Afin, notamment d'éliminer autant que possible les « goûts de bouchon », le liège est soumis à divers traitements, en particulier à des opérations de nettoyage.

Les traitements et opérations de nettoyage interviennent à différents stades de la fabrication ou de la maintenance des objets en liège, tels que, par exemple, des bouchons.

Un traitement est la suppression des micro-organismes du liège, responsables de la production de métabolites indésirables, pendant les traitements eux-mêmes, après finition.

Ainsi, avant la finition des bouchons, on effectue un lavage au chlore, par du chlorure de chaux ou de l'hypochlorite, suivi d'un lavage à l'acide oxalique, selon un procédé traditionnel, ou bien un lavage au peroxyde (peroxyde d'hydrogène ou acide peracétique), ou encore à l'acide sulfamique, ou encore un lavage au métabisulfite, en employant une solution de $SO_2$.

Après la finition des bouchons, on traite, les bouchons lavés ou non, par injection de $SO_2$, par de l'oxyde d'éthylène ou par irradiation gamma.

Le procédé le plus courant, pour éliminer les composés volatils responsables des goûts, est l'utilisation de l'eau chaude ou bouillante, connu sous le nom de « bouillage ».

Ainsi, dans le procédé F. BORDAS, qui date de 1904, on place les pièces dans une enceinte chauffée à 120°C pendant 10 minutes, on fait ensuite le vide, puis on rétablit la pression en laissant pénétrer la vapeur d'eau.

On porte ensuite l'enceinte à 130°C pendant 10 minutes.

Ce travail ancien n'est étayé par aucune donnée précise et chiffrée.

Le procédé CHAMPCORK consiste à placer les pièces dans une enceinte saturée en vapeur d'eau à 130°C et à une pression de 180 kPa pendant 18 - 20 minutes. On rétablit ensuite la pression atmosphérique.

Toutes les techniques décrites ci-dessus présentent de nombreux inconvénients, parmi lesquels on peut citer :

- une faible efficacité envers les composés organiques responsables des goûts indésirables ;
- une efficacité incomplète vis-à-vis de certains micro-organismes.

En outre, la plupart des techniques mentionnées utilisent des produits chimiques induisant des risques, des nuisances, et des contraintes, aussi bien pour le personnel qui les met en oeuvre, que pour l'environnement.

Ainsi, les opérateurs sont-ils exposés au risque d'inhalation de substances nocives, ce qui entraîne l'obligation du port d'un masque, tandis que les effluents générés par ces traitements contiennent de grandes quantités de composés soufrés et/ou chlorés et doivent subir une épuration longue et coûteuse avant de pouvoir être rejetés.

Le document de MIRANDA, Ana M. et al, « High-pressure extraction of cork with CO2 and 1,4 dioxane », Process. Technol. Proc. (1996), 12 (High Pressure Chemical Engineering), pages 417 - 422, décrit un procédé de traitement du liège par des mélanges à haute pression (170 bars) de $CO_2$ et de dioxane, dans une plage de températures de 160°C à 180°C. On réalise de la sorte l'extraction de la subérine.

Les conditions du procédé, décrites par ce document, sont totalement incompatibles avec une utilisation du liège, après traitement, en particulier pour la fabrication de bouchons.

Le document US-A-5 364 475 est relatif à un procédé d'assainissement du bois, en particulier un procédé d'extraction des composés de type pentachlorophénol (PCP) ou d'autres composés organiques biocides non ioniques, dans lequel le bois est tout d'abord découpé en morceaux de taille adéquate, puis est soumis à un traitement par un fluide à l'état supercritique, par exemple du $CO_2$.

Un agent modifiant ou cosolvant, choisi parmi le méthanol, l'éthanol et l'acétone, est, de préférence, ajouté au fluide supercritique en une proportion de 1 à 10 % en poids, ce qui permet d'accroître le rendement de l'extraction.

Le procédé de ce document ne s'applique qu'au pentachlorophénol (trichloroanisole et tetrachloroanisole en sont exclus) et ne permet d'en extraire que des taux compatibles avec l'évolution potentielle de certaines normes environnementalistes (Toxicity Characteristic Leaching Profile level) (de l'ordre de 0,1 ppm).

L'enveloppe externe (« outer shell ») des troncs traités est mentionnée dans ce brevet sans qu'il soit précisé s'il s'agit de liège ou même d'écorce car la couche externe dont ils parlent peut aussi être constituée en partie de bois si le procédé d'imprégnation a entraîné une forte pénétration dans la matière du PCP. En français comme en anglais le mot liège ou cork correspond à une définition très précise d'un type de matériaux et également de l'essence. Le chêne liège ou (« cork oak ») (Quercus suber L.[1]) correspond à une espèce très particulière non mentionnée dans le brevet américain cité.

De plus, il est indiqué que le produit traité doit être divisé en particules dont la taille ne peut excéder 1 à 5 mm d'épaisseur mais il est montré dans la table 7 qu'au dessus de 0,25 mm le rendement d'extraction diminue très rapidement.

Cette étape de broyage, déchiquetage est extrêmement pénalisante et entraîne que ce procédé ne puisse en aucun cas être mis en oeuvre pour traiter des plaques de liège ou des bouchons.

De même, le document DE-A-4 223 029 décrit un procédé d'extraction d'huile de goudron à partir de bois ancien ou de déchets de bois, dans lequel le bois est tout d'abord broyé à une taille de 10 à 40 mm, puis est mis en contact avec un fluide d'extraction supercritique, tel que du $CO_2$ ou un hydrocarbure aliphatique de 3 à 5 atomes de carbone, pendant une durée suffisante pour réduire la concentration en huile de goudron jusqu'à un seuil voulu.

Un cosolvant, tel que de l'éthanol ou de l'isopropanol, peut être ajouté au fluide supercritique, à raison de 2 à 5 % en volume par rapport à la teneur en eau du bois.

Le document WO-A-98/16288 concerne un procédé et une installation d'extraction de composés inorganiques et/ou éventuellement organiques polluants par un fluide supercritique, tel que le $CO_2$, à partir d'un matériau, tel que le bois.

Les composés organiques polluants extraits sont, notamment les polychlorobiphényles, les chlorophénols et polychlorophénols (PCP), le lindane, les composés organiques polyaromatiques, les insecticides, les fongicides, et autres adjuvants susceptibles de se trouver dans le bois.

Un cosolvant, tel que de l'eau, peut être ajouté au fluide supercritique dans les proportions de 5 à 20 % en poids.

Aucun des procédés décrits ci-dessus, mettant en oeuvre un fluide dense, sous pression, n'est appliqué au liège, or le liège est un matériau extrêmement spécifique, dont les propriétés sont en particulier différentes de celles du bois, principalement en ce qui concerne son élasticité et sa densité.

Le document chemical abstracts, vol.91, no. 21, 19 november 1979, abstract no 173 344 de GARCIA DEL RIO, J.R. (Sem.Vitivinic (1979), 34(1. 712), 945/947,949). décrit un procédé de désinfection du siége par mise en oxyde contact avec du $CO_2$ à une pression nn précisée et d'éthylène.

On peut ajouter que la constitution chimique du liège est très différente de celle du bois tout particulièrement au niveau de la composition en subérine, lignine et cellulose.

La composition chimique du liège est généralement la suivante :

46% de subérine (constituant principal du liège) La grande compressibilité et élasticité du liège sont dues à la présence de subérine en quantité importante.

25% de lignine (structure des parois cellulaires)

12% de cellulose et autres polysaccharides La cellulose du liège est sous forme libre.

6% de tanins

6% de céroïdes Les céroïdes repoussent l'eau et contribuent à l'imperméabilité du liège

5% de cendres et autres composés

On pourra à ce propos se reporter aux documents suivants :

A. Guillemonat. Progrès récents dans l'étude de la constitution chimique du liège. Ann. Fac. Sc. de Marseille, 1960, 30, 43-54.

H. Pereira. Chemical composition and variability of cork from Quercus suber L. Wood Sci. Technol., 1988, 22 (3), 211-218.

A titre de comparaison la composition chimique d'un bois sec est généralement la suivante:

60 % de cellulose

25% de lignine (structure des parois cellulaires)

15 %d'autres composés.

C'est cette différence de constitution qui fait que le liège est un matériau spécifique et fondamentalement différent du bois.

Il ressort de l'étude de l'art antérieur qui précède, qu'il existe un besoin, non satisfait, pour un procédé de traitement ou de nettoyage du liège, afin d'en éliminer les composés organiques contaminants, polluants, tels que les chlorophénols et les chloroanisoles responsables notamment de goûts et d'odeurs indésirables.

Il existe encore un besoin pour un procédé de nettoyage du liège qui permette l'élimination sélective desdits produits organiques contaminants sans que certains autres composés organiques, tels que la subérine, les céroïdes, la lignine et la cellulose, qui confèrent au liège des propriétés souhaitables, voire indispensables, notamment en vue de son utilisation pour la fabrication de bouchons, ne soient affectés.

Ce procédé doit, en outre, de préférence, simultanément assurer une élimination ou une limitation de la présence et de la prolifération des micro-organismes, tels que des bactéries et champignons, dans le liège.

Le but de la présente invention est de fournir un procédé de traitement du liège, qui réponde, entre autres, à l'ensemble des besoins et exigences mentionnées ci-dessus.

Le but de la présente invention est encore de fournir un procédé de traitement du liège, qui ne présente pas les défauts, désavantages, limitations, et inconvénients des procédés de l'art antérieur et qui résolve les problèmes des procédés de l'art antérieur.

Ce but et d'autres encore sont atteints, conformément à l'invention, par un procédé de traitement du liège ou d'un matériau à base de liège, dans lequel on met en contact le liège ou ledit matériau à base de liège avec un fluide dense sous pression à une température de 10 à 120°C et sous une pression de 10 à 600 bars.

Par « liège », on entend les matériaux constitués de liège à l'exclusion de tout autre matériau, tandis que par matériau à base de liège traité par le procédé selon l'invention, on entend les matériaux comprenant une proportion généralement majoritaire de liège, les matériaux composites à base de liège, etc..

Comme on le verra plus loin, le liège ou le matériau à base de liège peut être un matériau mis en forme ou non.

Dans les conditions de température et de pression du procédé de l'invention, il est possible de nettoyer et/ou de décontaminer le liège ou le matériau à base de liège avec une grande efficacité.

En d'autres termes, il est possible, grâce au procédé de l'invention, d'extraire et/ou d'éliminer la quasi totalité, voire l'intégralité des contaminants, polluants ou composés organiques indésirables, se trouvant dans le liège ou le matériau à base de liège, tout en n'affectant pas, ou du moins en maintenant à un niveau acceptable, la teneur en composés présents naturellement dans le liège ou le matériau à base de liège, tels que céroïdes, subérine, lignine et cellulose.

Or, ces composés et leurs teneurs confèrent les propriétés nécessaires et indispensables au liège dans la plupart de ses utilisations, en particulier pour la fabrication de bouchons.

Les propriétés du liège, liées à ces composés et à leur teneur, ne sont donc pas détériorées par le traitement, par le procédé selon l'invention.

Ces propriétés sont notamment des propriétés physiques, chimiques et organoleptiques.

Le procédé selon l'invention permet d'obtenir un liège ou un matériau à base de liège traité dont les propriétés sont excellentes, et équivalentes, voire supérieures à celles du liège ou du matériau à base de liège traité par les procédés de l'art antérieur, sans souffrir de leurs inconvénients.

Ainsi, comme on l'a déjà mentionné plus haut, le procédé décrit dans le document de MIRANDA et al., du fait des conditions drastiques de température et de pression qu'il implique, provoque-t-il une détérioration considérable des propriétés du liège, si bien que celles-ci sont totalement incompatibles avec une utilisation du liège après ce traitement pour la fabrication de bouchons. Par ailleurs, le but poursuivi par ce document est fondamentalement différent, puisque, au contraire du procédé selon l'invention, il cherche à extraire la subérine du liège, et non à la conserver dans celui-ci, afin d'en préserver les propriétés.

De même, le procédé décrit dans ce document ne vise pas à extraire ou éliminer spécifiquement les composés organiques indésirables, ce qui constitue le but essentiel de la présente invention.

Selon l'invention, l'utilisation du fluide à l'état dense sous pression dans les conditions ci-dessus, permet de remplacer avantageusement et/ou d'améliorer les procédés classiques de nettoyage et/ou de décontamination du liège.

Selon l'invention, le fluide à l'état dense, sous pression, est de préférence mis en contact avec le liège ou le matériau à base de liège a une pression de 100 à 300 bars et à une température de 40 à 80°C.

De préférence encore, ledit fluide dense, sous pression, est un fluide à l'état supercritique, c'est-à-dire que le fluide dense est sous une pression et à une température, telle que le fluide est à l'état supercritique.

Ainsi, dans le procédé selon l'invention, on met en oeuvre, par exemple, un composé gazeux, dans les conditions normales de température et de pression, et on augmente sa masse volumique en augmentant sa pression. En modifiant également la température, on va se placer ainsi dans le domaine où le fluide se trouve à l'état dense et sous pression, de préférence, dans son état supercritique. Ce domaine peut être facilement déterminé par l'homme du métier dans ce domaine de la technique.

Selon l'invention, on peut faire varier de manière contrôlée les propriétés extractives du fluide en agissant sur les deux paramètres de températures et de pression, tout en restant dans le domaine dense et sous pression, de préférence, supercritique du fluide en question : ainsi, l'augmentation de la pression et de la température augmentent la capacité de solubilisation, tandis que la diminution de la pression diminue la viscosité et augmente la diffusivité.

Ainsi, selon l'invention, on peut, lors du traitement, effectuer des cycles de compression/décompression, de préférence, très rapides avec, par exemple, une amplitude de la variation de pression de 10 à 100 bars, et des intervalles de temps de 10 secondes à quelques minutes, par exemple, 10 minutes, le tout, par exemple, pendant 1 à quelques heures, par exemple, 10 heures.

On augmente ainsi la pénétration du fluide solvant dans le matériau, ce qui a pour conséquence d'améliorer les performances du nettoyage, ainsi que l'assouplissement du liège à coeur.

Les avantages du procédé de l'invention découlent, pour l'essentiel, des caractéristiques spécifiques du $CO_2$ à l'état dense sous pression, en particulier, supercritique et du fait que cette technique peut, de manière surprenante, s'appliquer au liège.

Il n'était, en effet, absolument pas prévisible du fait des différences considérables de propriétés existant entre, d'une part, le bois et, d'autre part, le liège, qu'un procédé analogue pour traiter le bois, pourrait aussi s'appliquer au liège ou aux matériaux à base de liège.

La différence de constitution existant entre le bois et le liège qui a été amplement démontrée plus haut fait que le liège est un matériau extrêmement spécifique, et que la mise en oeuvre dudit fluide dense sous pression pour traiter le liège ne peut en aucun cas se déduire de la mise en oeuvre de ce même fluide pour traiter le bois. En outre le procédé selon l'invention s'applique à du liège provenant d'une espèce très particulière d'arbre (Quercus suber L.) qui subit des levages successifs afin que son écorce conduise à un matériau dont les propriétés sont totalement différentes des écorces des bois des autres espèces. Les applications qui en découlent s'effectuent dans des domaines très différents.

Le dioxyde de carbone présente l'avantage d'une mise en oeuvre relativement facile : il est bon marché, non toxique, ininflammable et possède des conditions critiques facilement accessibles (pression critique : Pc 7,3 Mpa et température critique Tc de 31,1°C).

Le $CO_2$, à l'état dense sous pression, liquide ou supercritique, solubilise la plupart des composés organiques de masses molaires inférieures ou égales à 2 000 g/mole. C'est donc un solvant excellent vis-à-vis des composés organiques, dits « indésirables », comme, par exemple, le pentachlorophénol (PCP) et les tri et tétra-chloroanisoles (TCA et TeCA), provenant d'une charge naturelle contenue dans le liège et/ou d'une contamination accidentelle.

La relative inertie chimique du $CO_2$, à l'état dense, le rend particulièrement apte à être mis en oeuvre dans un procédé visant à nettoyer du liège ou un matériau à base de liège, notamment lorsque ce liège ou ce matériau est destiné à fabriquer des pièces pour une utilisation alimentaire, comme des bouchons.

De plus, la faible viscosité du $CO_2$ à l'état dense, ses coefficients de diffusion élevés et sa très faible tension interfaciale permettent le nettoyage de pièces de liège complexes par leurs formes et leurs caractéristiques physiques, en particulier lorsqu'on se trouve en présence de phénomènes d'adsorption, que ce soit à la surface ou au coeur de la pièce.

On peut citer, en outre, parmi les avantages, d'utiliser le $CO_2$ en complément ou en remplacement des procédés classiquement mis en oeuvre :

- une efficacité d'extraction quasi parfaite vis-à-vis des composés organiques indésirables, grâce à des caractéristiques physico-chimiques spécifiques ;
- un volume d'effluent résiduel quasi nul, strictement limité à la récupération des polluants extraits (dont PCP et TCA) et au recyclage du $CO_2$ gaz épuré ;
- une économie importante, par exemple, que ce soit en terme de solvant, par l'absence de traitement ou de récupération d'effluents ou encore par l'utilisation de $CO_2$ peu onéreux ;
- un respect de l'environnement, puisque le procédé ne génère pas, ou très peu, d'effluents aqueux ;
- une modularité du pouvoir solvant de la molécule variable en fonction des conditions d'utilisation, c'est-à-dire de la pression et de la température, permettant de s'adapter à la nature des produits à extraire et/ou à l'application recherchée.

Autrement dit, les deux caractéristiques de pression et de température permettent de maîtriser un fluide dont le pouvoir solvant est modulable en termes de solubilisation, notamment des composés contaminants, polluants, indésirables, du liège, et de cinétique d'extraction, notamment à l'intérieur de la matrice solide poreuse formant le liège.

La grande volatilité du $CO_2$ aux conditions (pression et température) normales le caractérise comme un solvant sec, ne nécessitant pas d'étape de séchage après nettoyage. De plus, le $CO_2$ ne laisse pas de trace résiduelle sur la pièce traitée.

Le traitement en atmosphère $CO_2$ peut permettre d'éviter les risques d'oxydation et d'améliorer l'état de surface final de la pièce.

Selon l'invention, un composé, dit « cosolvant » est ajouté au fluide dense, sous pression. L'addition d'un tel cosolvant à un fluide dense sous pression, dans le cadre spécifique du traitement du liège, n'est ni décrite, ni suggérée, dans l'art antérieur.

Il a été constaté, de manière surprenante, selon l'invention, que l'addition d'un cosolvant au fluide dense, sous pression, permettait d'obtenir une extraction totale des composés organiques contaminants, polluants, autrement dit, des composés indésirables, à partir de liège ou d'un matériau à base de liège.

L'ajout du cosolvant assure une extraction sélective des composés organiques indésirables, tout en maintenant, comme on l'a mentionné ci-dessus, à des niveaux acceptables, la teneur en composés naturellement présents dans le liège, tels que céroïdes, subérine, lignine et cellulose.

En d'autres termes, l'ajout d'un cosolvant approprié va permettre d'orienter la sélectivité de l'extraction vers les polluants, contaminants et composés organiques indésirables, que l'on souhaite éliminer et extraire.

En outre, il a été constaté, de manière totalement surprenante, que l'addition de cosolvant entraînait, par une sorte d'effet synergique, une diminution de la croissance des micro-organismes très nettement supérieure à celle obtenue pour le seul $CO_2$, cette diminution de la croissance des micro-organismes peut ainsi passer d'un facteur 100 à un facteur 1 million, lorsque l'on ajoute le cosolvant.

Parmi les solutions aqueuses, on peut citer des solutions tampons, par exemple, de phosphate et/ou hydrogénosphosphate, etc., pour stabiliser le pH du procédé ; des solutions d'antibiotiques, telles que la pénicilline, et/ou d'antifongiques, pour accroître l'élimination de microorganismes ; des solutions d'antioxydants, telles que l'acide ascorbique, pour stabiliser le matériau, etc.

Selon l'invention, ledit cosolvant est ajouté au fluide dense, sous pression, de préférence à raison de 0,02 à 1 % en poids, de préférence encore de 0,02 à 0,1 % en poids.

Le cosolvant, s'il s'agit d'eau, peut se trouver en partie déjà présent dans le liège, et l'on n'ajoutera alors dans le fluide supercritique que la quantité nécessaire pour donner les concentrations mentionnées plus haut.

Ainsi, l'invention a, elle, également trait à un procédé d'extraction sélective des composés organiques contaminants à partir de liège ou d'un matériau à base de liège, dans lequel ledit matériau à base de liège est traité par mise en contact avec un fluide dense sous pression dans les conditions de température et de pression selon l'invention, un cosolvant étant ajouté au fluide dense sous pression.

Les composés organiques contaminants ou polluants ci-dessus, auxquels peut s'appliquer le procédé de l'invention, sont des composés organiques susceptibles de se trouver dans le liège, et qui constituent des polluants ou contaminants qui doivent être éliminés pour permettre l'utilisation du liège ou du matériau à base de liège, sans inconvénients.

D'autres composés organochlorés, tels que le lindane, et des composés organiques polyaromatiques (HPA) peuvent également être extraits par le procédé de l'invention.

Le procédé selon l'invention est également applicable à l'extraction de composés organiques de type triazole, pyréthroïdes de synthèse, insecticides et fongicides éventuellement présents dans le liège.

Il est à noter que dans la description, par soucis de simplification, on a utilisé les termes « composés organiques » au pluriel, il est bien évident que le procédé selon l'invention peut ne concerner qu'un seul composé organique.

Selon l'invention, lesdits composés organiques contaminants, polluants extraits sont essentiellement et préférentiellement les composés organiques responsables des goûts et/ou odeurs indésirables.

Par goût ou odeur « indésirable », on entend généralement un goût ou une odeur que l'on ne souhaite pas que le liège présente, en particulier dans les conditions de son utilisation, par exemple, lors d'un contact avec un liquide alimentaire.

Un goût ou odeur « indésirable » peut généralement être défini comme un goût ou une odeur considérée comme « désagréable » pour la plupart des utilisateurs.

Ces composés responsables des goûts et/ou odeurs indésirables sont, en particulier, des (poly)chlorophénols et autres composés phénoliques et des (poly)chloroanisoles et autres dérivés de l'anisole, notamment le pentachlorophénol (PCP), le trichloroanisole (TCA) et le tétrachlorosanisole (TeCA).

Les composés, cités ci-dessus, sont présents dans le liège, soit de manière naturelle, soit de manière induite.

L'extraction, réalisée dans le procédé décrit dans notre brevet, s'effectue sur des produits organiques ne provenant pas d'un traitement effectué de manière intentionnelle comme cela est le cas sur du bois abattu (troncs, planches...) pour la conservation des planches et autres matériaux à base de bois qu'il conviendrait de dépolluer dans le but d'un recyclage.

Le procédé d'extraction selon l'invention, comme on l'a déjà indiqué plus haut permet, de manière surprenante, une élimination totale, sélective, des composés organiques responsables des goûts et/ou odeurs indésirables du liège, tout en maintenant à un niveau adéquat la teneur en un certain nombre de composés, tels que céroïdes, subérine, tannins, lignine et cellulose, confèrent les qualités physiques, chimiques, organoleptiques et mécaniques indispensables au liège, en particulier, lorsque celui-ci est utilisé pour la fabrication de bouchons.

L'élimination des composés organiques indésirables et, en particulier, du TCA, sans simultanément éliminer les céroïdes, nécessaires notamment au bon comportement mécanique d'un bouchon en liège, constitue un effet surprenant du procédé selon l'invention, et n'est ni décrit ni suggéré par l'art antérieur.

Le procédé répond ainsi à une attente longtemps insatisfaite dans ce domaine de la technique et triomphe d'un préjugé largement répandu parmi les professionnels du liège, selon lequel il est impossible de parvenir à une élimination sélective des composés indésirables sans affecter les composés bénéfiques.

Selon l'invention, il est possible d'obtenir aussi bien un effet d'extraction sélective des polluants et contaminants qu'une diminution (« synergique ») de la croissance des micro-organismes à des teneurs aussi faibles que 0,01 en poids de cosolvant, par exemple, de 0,02 à 1 % en poids, de préférence de 0,02 à 0,2 % en poids.

Les gammes de température et de pression mises en oeuvre au cours de l'opération d'extraction ou de traitement peuvent varier, à la condition que le fluide reste toujours un fluide dense sous pression, de préférence dans un état supercritique, de même, comme on l'a indiqué plus haut, on peut effectuer des cycles de compression/décompression.

Ces gammes de température et de pression ont déjà été mentionnées ci-dessus et s'appliquent au $CO_2$.

De telles conditions peuvent être maintenues pendant toute la durée du procédé, ou bien seulement au début du procédé d'extraction ou de traitement, où de telles conditions correspondant à une forte masse volumique et à une température élevée - le phénomène prépondérant étant la solubilisation - permettent d'extraire très rapidement les composés extérieurs à la matrice.

De manière générale, la durée du traitement ou de l'extraction (c'est-à-dire la durée pendant laquelle le liège ou matériau à base de liège est laissé en contact avec le fluide dense sous pression) est de une ou quelques minutes, par exemple, 10 minutes, à une ou quelques heures, par exemple, 10 heures, en fonction du débit du fluide et de la quantité de matériaux à traiter.

Après quelques minutes, c'est-à-dire, par exemple, après 5 à 20 minutes, une fois les matériaux soumis aux conditions de pressions et de températures du procédé, l'extraction s'effectue de façon très rapide grâce à un pouvoir diffusif très important.

Après avoir atteint l'équilibre, par exemple de 30 à 60 minutes, on peut considérer que l'extraction est totale avec un rendement voisin, par exemple, de 99,9 %.

Les rendements d'extraction sont dans tous les cas très élevés, même pour les composés chlorés, où l'on atteint un rendement supérieur à 85 %, par exemple, un rendement de 98 %.

Le taux de solvant utilisé, c'est-à-dire le poids de fluide dense - solvant, de préférence, supercritique, mis en oeuvre par rapport au poids de liège ou de matériau à base de liège, est en général de 10 à 100 kg de fluide/kg de liège ou de matériau à base de liège.

Avantageusement, le procédé selon l'invention comprend, suite à l'extraction ou au traitement, un recyclage du fluide, après une ou plusieurs étapes de séparation physico-chimiques permettant de séparer le fluide des extraits.

De manière classique, les premières étapes de séparation consistent en une diminution de la masse volumique du fluide par une série de détentes et réchauffages successifs afin de se rapprocher de l'état gazeux.

Le pouvoir solvant du fluide diminue et l'on récupère ainsi une partie des extraits précédemment solubilisés lors de l'étape d'extraction.

Ainsi, le procédé, selon l'invention, d'extraction ou de traitement du liège permet de séparer physiquement en fin de traitement, d'une part, du liège ou un matériau à base de liège utilisable, qui représente généralement environ de 90 % à 99 % du produit initial, d'une part, des produits indésirables, naturels ou artificiels, organiques, représentant environ de moins de 1 % à 10 % du produit initial dont la manipulation, le traitement ou l'élimination peut se faire de manière spécifique et donc aisément maîtrisée, tandis que le gaz ou fluide peut avantageusement être recyclé afin de réaliser une nouvelle extraction ou un nouveau traitement.

De ce fait, le procédé de traitement ou d'extraction peut être réalisé en circuit fermé ou en boucle, ce qui signifie, de manière avantageuse, que grâce à une charge initiale et constante de $CO_2$, on peut progressivement épuiser le liège ou le matériau à base de liège des composés organiques indésirables.

De manière plus précise et suite au procédé d'extraction proprement dit, le procédé selon l'invention comprend avantageusement une ou plusieurs étapes, par exemple, jusqu'à 3 étapes de séparation physicochimiques, dans lesquelles on diminue la masse volumique du fluide, par exemple par une série de détentes et de réchauffages successifs au nombre, de préférence de 1 à 3, afin de se rapprocher de l'état gazeux.

Les conditions régnant dans ces étapes successives seront, par exemple, les suivantes : 90 bars et 50°C, 70 bars et 40°C et 50 bars et 40°C.

Du fait que le pouvoir isolant du fluide diminue, on récupère ainsi les extraits précédemment solubilisés lors de l'étape d'extraction.

Ces extraits se présentent sous la forme de liquides concentrés plus ou moins fluides, et peuvent être spécifiquement traités et, éventuellement, détruits, s'il s'agit de polluants.

Le gaz obtenu à l'issue de la séparation est, de préférence, recyclé vers l'étape d'extraction, où il est reconditionné, afin de le remettre dans des conditions de température et de pression pour qu'il soit dans un état supercritique, le gaz peut ainsi être tout d'abord refroidi à la pression atmosphérique, stocké sous forme liquide, puis réchauffé et comprimé avant d'être envoyé dans le procédé d'extraction proprement dit.

Avant son recyclage, le gaz est de préférence purifié, par exemple, par du charbon actif, afin d'éliminer les traces de produits organiques volatils non séparés lors de l'étape précédente.

En effet, une purification poussée du gaz est généralement nécessaire, sous peine de réduire grandement les performances d'extraction.

Selon l'invention, préalablement ou postérieurement au traitement ou à l'extraction par le fluide dense sous pression, le liège ou le matériau à base de liège peut, en outre, être soumis à un traitement mécanique et/ou chimique.

Par traitement mécanique et/ou chimique, on entend généralement un traitement connu, tel qu'il a déjà été décrit ci-dessus, dans le cadre de l'exposé de l'art antérieur.

Ce traitement est, de préférence, un traitement par de l'eau chaude ou bouillante, communément appelé traitement de « bouillage ».

Selon l'invention, le liège ou le matériau à base de liège est mis en forme préalablement ou postérieurement audit traitement ou à ladite extraction par le fluide dense sous pression ; ou préalablement audit traitement mécanique et/ou chimique éventuel, précédant ledit traitement ou ladite extraction par le fluide dense sous pression ; ou postérieurement, audit traitement mécanique et/ou chimique éventuel, suivant ledit traitement ou ladite extraction par le fluide dense sous pression.

En d'autres termes, dans le procédé selon l'invention, la ou les pièces à nettoyer, c'est-à-dire la ou les pièces brutes, avant ou après emboutissage et avant ou après traitement mécanique et/ou chimique, de préférence de bouillage, sont soumises à un contact avec le fluide à l'état dense, sous pression.

Cette mise en forme, façonnage ou emboutissage, a pour but de mettre le liège ou le matériau à base de liège, généralement en liège pur, sous la forme voulue convenant à l'utilisation recherchée, il peut s'agir de planches, de bouchons emboutis ou moulés, par exemple, de bouchons en matériaux composites, de pièces de liège entrant dans la fabrication d'objets ou de dispositifs à vocation alimentaire, d'une part, ou non alimentaire, d'autre part.

On a vu plus haut le procédé de l'invention convenait particulièrement pour préparer un liège ou un matériau à base de liège dont les qualités sont optimales pour la fabrication d'un bouchon.

Ainsi, l'invention concerne-t-elle également un procédé de fabrication de bouchons en liège ou en matériau à base de liège, qui comprend au moins une étape de traitement ou d'extraction, telle que décrite ci-dessus.

Cette étape pourra être incluse dans le procédé de fabrication de bouchons en un point quelconque de celui-ci.

Par « substantiellement exempt », on entend que la teneur en ces composés est telle que l'odeur et/ou le goût indésirable causé par les composés ne sont pas présentés par le liège ou le matériau à base de liège selon l'invention.

Les bouchons, selon l'invention, conviennent notamment au bouchage de récipients, tels que des bouteilles, barriques, tonneaux ou autres, contenant des produits alimentaires, de préférence, liquides, tels que des produits viticoles.

L'invention sera mieux comprise à la lecture de la description suivante, faite en référence aux dessins joints, dans lesquels :

- la figure 1 représente, de manière schématique, une vue latérale en coupe d'un exemple d'installation pour la mise en oeuvre du procédé de l'invention ;
- la figure 2 est un graphique donnant l'efficacité de nettoyage E en % de pièces de liège supplémentées en PCP et en TCA, bouillies (à droite) et non bouillies (à gauche) pour diverses durées de traitement t (en heures) et diverses densités du $CO_2$ $dCO_2$ (en g/l), les colonnes avec des hachures serrées sont relatives au PCP (pentachlorophénol) et les colonnes avec des hachures espacées sont relatives au TCA (2,4,6-trichloroanisole) ;
- la figure 3 reprend sous forme graphique l'évaluation de la tenue mécanique de bouchons « tubés » dans des planches de liège traitées par du $CO_2$ et non traitées par du $CO_2$ ainsi que de pièce témoins, bouillies ou non.

La tenue mécanique a été évaluée par mesure des pressions de compression (PC) et des pressions de retour (Pret).

- La figure 4 est un graphique donnant la variation logarithmique, variation (log), de la croissance microbienne en fonction de la température appliquée (T(°C)) lors du traitement par $CO_2$ seul (courbe en traits pointillés) ou par $CO_2$ additionné d'eau (courbe en traits pleins).

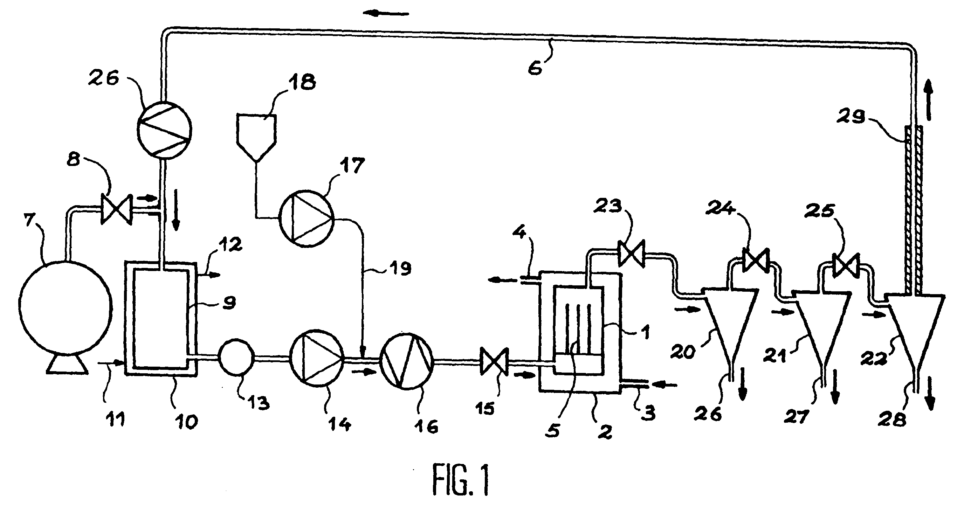

La figure 1 représente, de manière schématique, une vue latérale en coupe de l'installation pour mettre en oeuvre le procédé selon l'invention.

Il est bien évident qu'une telle figure ne représente qu'un exemple de réalisation d'une installation et qu'elle n'est donnée qu'à titre illustratif et non limitatif.

Sur cette figure, sont représentés des moyens de mise en contact du liège ou d'un matériau à base de liège sous la forme d'un extracteur ou autoclave (1).

Un tel extracteur est capable de supporter la pression mise en oeuvre dans le procédé de l'invention et il est également muni de moyens de chauffage et de régulation de la température sous la forme d'une double enveloppe thermostatée (2), dans laquelle circule un fluide caloporteur adéquat (3), (4).

Le volume de l'extracteur ou autoclave est variable, il est fonction notamment de la quantité de liège à traiter, il peut être facilement déterminé par l'homme du métier.

L'extracteur reçoit les pièces de liège ou de matériau à base de liège à traiter (5), par exemple, sous la forme de plaques, planches, ou de bouchons, ces pièces sont placées, de préférence, en un ou plusieurs support(s) ou grille(s).

Sur la figure 1, l'installation représentée ne comporte qu'un seul extracteur (1), il est bien évident que l'installation peut comprendre plusieurs extracteurs, par exemple, de 2 à 10, disposés, par exemple, en série.

L'installation comprend également des moyens pour amener un fluide, tel que du $CO_2$ à l'état dense et sous pression, par exemple à l'état supercritique.

Ainsi, sur la figure 1, le fluide, qui est du $CO_2$, en provenance d'une canalisation de recyclage (6), et/ou éventuellement d'un réservoir de stockage et d'appoint de $CO_2$ (7) pénètre-t-il, par l'intermédiaire d'une vanne (8) dans un réservoir de liquéfaction (9) muni de moyens de régulation de température sous la forme d'une double enveloppe thermostatée (10), dans laquelle circule un fluide caloporteur adéquat (11, 12).

Ledit $CO_2$ est ainsi liquéfié et circule au travers d'un débitmètre (13), puis est pompé et comprimé par l'intermédiaire d'une pompe (14), par exemple, une pompe de compression de type à membrane ou à piston ou, par exemple, d'un compresseur vers l'extracteur (1).

Avant d'être introduit dans l'extracteur (1), par l'intermédiaire d'une vanne (15), le $CO_2$ pompé, est réchauffé dans un échangeur (16), dit échangeur « supercritique », dans lequel il est réchauffé pour se trouver dans des conditions où il est sous la forme d'un fluide dense et sous pression, en particulier, d'un fluide dense supercritique.

C'est-à-dire que le fluide, est, dans cet échangeur réchauffé au-delà de sa température critique qui est de 31,1°C.

Sur la figure 1, on a également représenté des moyens d'injection d'un cosolvant sous la forme d'une pompe haute pression (17) alimentée par un réservoir de cosolvant (18), qui permet l'apport progressif d'une quantité connue de cosolvant dans le fluide comprimé, par l'intermédiaire d'une canalisation (19) reliée à la canalisation d'alimentation en fluide de l'extracteur (1), en amont de l'échangeur (16) et en aval de la pompe de compression (14).

C'est donc le mélange formé par le fluide comprimé et le cosolvant qui est amené à la température de travail par l'intermédiaire de l'échangeur (16).

Selon l'invention, le mélange fluide et cosolvant imprègne dans l'enceinte de l'extracteur (1) les pièces de liège ou de matériau à base de liège à traiter (5), par exemple, des plaques de liège ou des bouchons déjà emboutis, et extrait les composés chimiques contaminants indésirables.

Selon la taille des pièces à traiter, une ou plusieurs pièces seront traitées simultanément.

A condition que la solubilité ne soit pas trop grande, par barbotage, le fluide tel que le $CO_2$ va se charger plus ou moins en fonction du temps de contact entre les deux corps.

Ainsi, à l'entrée de l'autoclave d'extraction (1), le fluide supercritique sera une solution homogène de $CO_2$ et de cosolvant.

On peut aussi préalablement mélanger la charge de liège à une proportion connue de cosolvant, avant l'opération d'extraction, c'est-à-dire avant d'introduire le fluide dans l'autoclave.

Le courant de $CO_2$, dans lequel sont solubilisés les composés extraits du liège est ensuite envoyé vers des moyens de séparation reliés au sommet de l'extracteur ou autoclave (1) et comprenant, par exemple, trois séparateurs de type cyclone (20, 21, 22) reliés en série, chacun d'entre eux étant précédé d'une vanne de détente automatique (23, 24, 25).

Trois séparateurs de type cyclone (20, 21, 22) ont été représentés sur la figure 1, mais il est bien évident que le nombre, le type et la succession des séparateurs peut varier.

La détente à laquelle est soumis le fluide s'opère à température constante.

Dans chacun des séparateurs, se produit une séparation ou démixtion, d'une part, des composés organiques extraits du liège qui sont sous forme de liquide et, d'autre part, d'un gaz, le $CO_2$.

Les composés extraits du liège sont soutirés (26, 27, 28), par exemple, à la base des séparateurs, et récupérés, puis éventuellement soumis à de nouvelles opérations de séparation, d'extraction ou de purification, par exemple, centrifugation, décantation ou extraction liquide/liquide, ou détruits.

Le $CO_2$ issu de la séparation est épuré, puis envoyé dans les moyens de recyclage du fluide, qui comprennent, essentiellement, une canalisation (6) et un échangeur « froid » (26) ou liquéfacteur, par exemple, sous la forme d'une enceinte thermostatée, pour être dirigé vers la réserve liquide (9) à basse température, maintenue par l'intermédiaire d'un bain réfrigérant qui refroidit et liquéfie le $CO_2$ (11, 12).

Les moyens d'épuration (29) ont été représentés sur la figure 1 par une colonne à reflux ou une colonne à charbon actif (29) placée sur les moyens de recyclage du fluide.

Enfin, l'installation comprend des moyens de régulation (non représentés), notamment de la pression, dans les différentes parties du procédé, qui comprennent une chaîne de régulation composée de capteurs de pression, de régulateurs et de vannes à aiguille pilotées pneumatiquement.

L'invention va maintenant être décrite en référence aux exemples suivants, donnés à titre illustratif et non limitatif.

Exemples

On a réalisé le traitement ou nettoyage d'échantillons de liège par le procédé de l'invention, en utilisant une installation analogue à celle de la figure 1, le fluide étant du $CO_2$ dense, sous pression.

Plus précisément, cette installation comprend :

- une réserve de $CO_2$ sous la forme d'une sphère d'environ 300 kg, une telle sphère est disponible dans le commerce ;
- un liquéfacteur sous la forme d'une enceinte en acier d'environ 2 litres et thermostatée à basse température, par l'intermédiaire d'un bain réfrigérant ;
- une pompe de compression de 0 à 300 bars et d'un débit maximum de 10 kg/h ;
- une pompe à cosolvant de 0 à 300 bars pour permettre l'apport progressif d'un cosolvant, tel que de l'eau à de 0,01 à 0,1 % en poids, dans le $CO_2$ dense sous pression ;
- un échangeur supercritique sous la forme d'une double enveloppe thermostatée ;
- un extracteur, sous la forme d'un autoclave d'un volume de 6 litres et d'une pression maximale de 300 bars doté d'une double enveloppe ;
- trois séparateurs de type cyclone, dotés de vannes de détente automatique.

Les pièces de liège à traiter sont placées dans l'autoclave et se présentent sous la forme de planches ou plaques d'une dimension de quelques dizaines de centimètres.

Les pièces de liège à traiter comportent deux lots différents :

- un premier lot de pièces de liège a subi une opération de bouillage, conforme aux pratiques usuellement admises pour le type de matériau ; à savoir, une immersion pendant 1 h 30 dans de l'eau à 100°C ;
- un second lot de pièces de liège n'a pas subi de bouillage.

Les deux lots ont été soumis à un traitement de supplémentation par une solution aqueuse de PCP (pentachlorophénol) et de TCA (trichloroanisole) par trempage dans un récipient pendant quelques heures, à savoir, de 1 à 5 heures, avec action d'ultrasons pour parfaire l'imprégnation des pièces de liège.

On mesure la teneur en PCP et en TCA des pièces de liège, avant et après traitement de ces pièces par le procédé de l'invention.

Ces mesures sont effectuées par broyage de l'échantillon, extraction liquide-solide, transformation en acétate pour le PCP, purification sur cartouche et analyses par chromatographie en phase gazeuse et spectrométrie de masse.

Des tests mécaniques sont également réalisés sur des bouchons « tubés » dans les pièces (planches) de liège traitées, non traitées, et bouillies et non bouillies. Ces tests sont les suivants :

- mesure de la pression de compression (PC), qui consiste à mesurer la pression à exercer pour amener un bouchon de liège de 24 mm de diamètre nominal jusqu'à 16 mm, qui est le diamètre de compression d'une boucheuse ;
- mesure de la pression de retour (Pret) qui est la mesure de la pression exercée par le bouchon de liège, lorsqu'il revient de 16 mm, qui est le diamètre de compression d'une boucheuse, jusqu'à 21 mm, qui est le diamètre maximal d'un col de bouteille.

Enfin, des essais de culture de la flore microbienne : levures, moisissures, germes aérobies mésophiles, entérobactéries, coliformes, bacillus et anaérobies sulfito-réducteurs, ont été réalisés par comptage sur milieux spécifiques d'ensemencement et évalués par la diminution du logarithme de la croissance de cette flore, après traitement par le $CO_2$ à l'état dense sous pression, avec et sans eau comme cosolvant.

Les exemples 1 et 2 suivants sont plus particulièrement relatifs à l'élimination de composés organiques à partir d'échantillons de liège, préalablement supplémentés à des taux très largement supérieurs à ceux normalement rencontrés dans les productions de liège destinées à la fabrication de bouchons.

Exemple 1

On traite par le procédé de l'invention des pièces (planches) de liège représentant une quantité totale d'environ 400 g de produit.

Ces pièces n'ont pas subi de traitement de bouillage préalable.

Le taux initial de PCP et de TCA, après analyse selon le mode opératoire défini ci-dessus, s'est avéré être de 75 ppb pour chacun des produits contaminants.

Les conditions opératoires du procédé selon l'invention sont généralement les suivantes:

- cosolvant : eau distillée à environ 0,2 ‰ ;
- pressions opératoires : de 100 à 300 bars ;
- température : environ 50°C ;
- durée du traitement : de 1 à 5 heures.

A l'issue du traitement, ces pièces en liège font l'objet d'une analyse de la teneur résiduelle en PCP et en TCA.

On réalise aussi une mesure de la tenue mécanique, de bouchons « tubés » dans ces planches, par les mesures de pressions de compression, « PC » et de retour « Pret », décrites plus haut.

Pour cette dernière évaluation, des mesures ont été également effectuées sur des bouchons tubés dans des pièces (planches) témoins non traitées par le procédé de l'invention, de façon à comparer la tenue mécanique obtenue après traitement par le procédé de l'invention, à celle obtenue en l'absence de traitement par ce procédé.

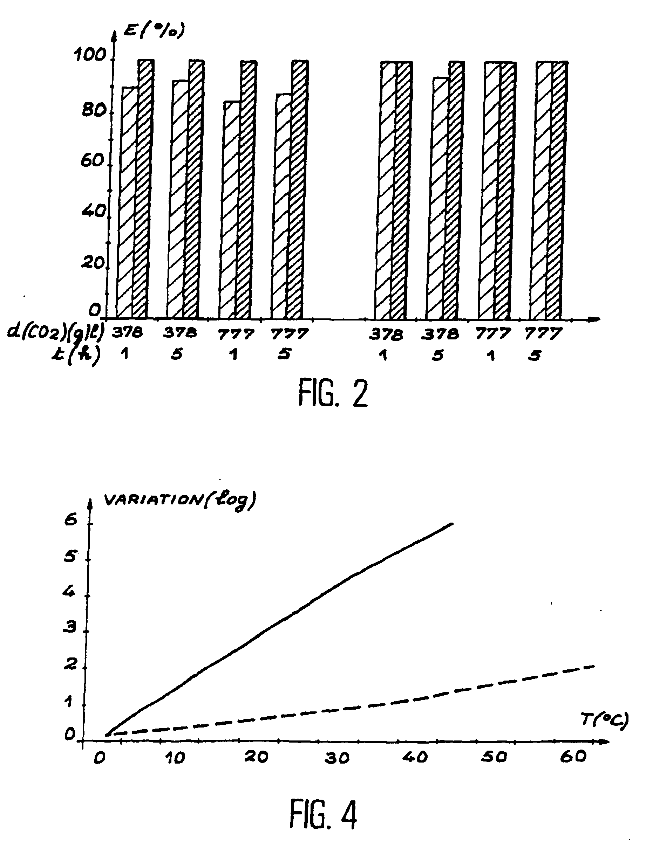

La figure 2 regroupe les résultats obtenus en terme d'efficacité de nettoyage en %, qui est définie par un ratio des masses de contaminant (PCP ou TCA), mesurées par analyse dans les pièces avant et après nettoyage par le procédé de l'invention et selon la formule suivante :

$$\text{Efficacité } \% = \left(1 - \frac{\text{masse de contaminant après traitement}}{\text{masse de contaminant avant traitement}}\right) \times 100 \, .$$

L'efficacité de nettoyage est donnée sur la figure 2 pour différentes durées de traitement et pour chacun des contaminants PCP et TCA.

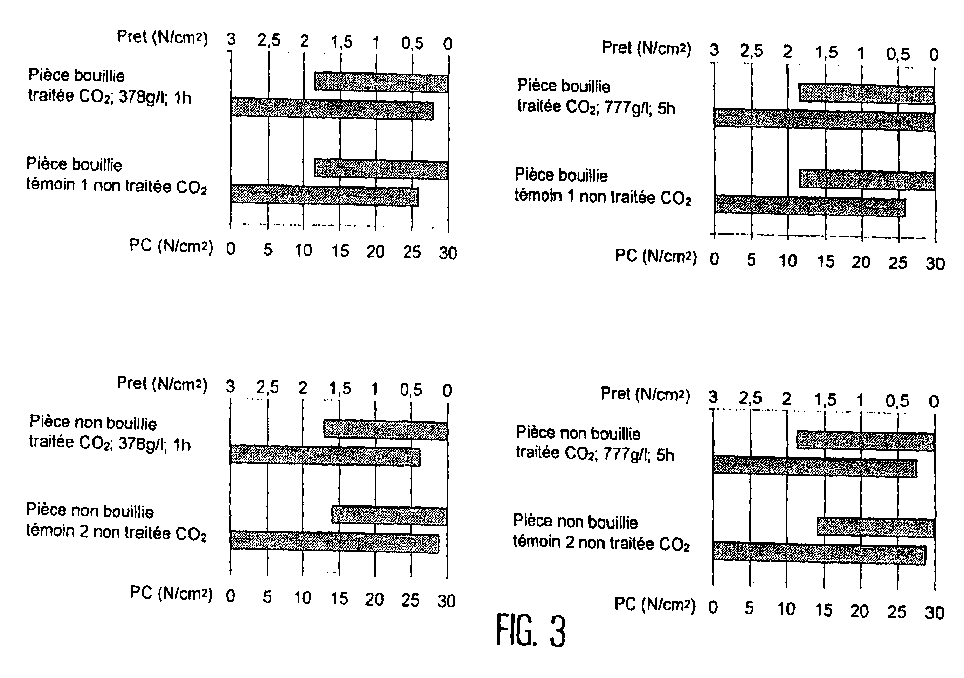

La figure 3 regroupe les résultats obtenus en ce qui concerne l'évaluation de la tenue mécanique (en $N/cm^2$) des bouchons tubés dans les pièces (planches) de liège traitées ou non traitées, par chacune des deux mesures de pression de compression « PC », et de pression de retour « Pret ».

Un témoin n'ayant pas été traité par le procédé de l'invention est utilisé comme référence.

On se reportera au Tableau 1 pour les résultats des tests relatifs à la tenue mécanique des bouchons tubés dans des planches de liège traitées et non traitées par le procédé de l'invention.

Sur le tableau sont également indiquées les conditions spécifiques du traitement selon l'invention, mises en oeuvre dans cet exemple.

Exemple 2

On traite par le procédé de l'invention des pièces (planches) de liège représentant une quantité totale d'environ 400 g de produit.

A la différence de l'exemple 1, ces pièces subissent, au préalable, un traitement par bouillage (immersion pendant 1 h 30 dans de l'eau proche de 100°C ).

Le taux initial de PCP et de TCA déterminé par analyse, selon le mode opératoire défini ci-dessus, s'est avéré être de 50 ppb pour chacun des produits contaminants.

On effectue sur les pièces (planches) en liège les mêmes mesures que celles effectuées dans l'exemple 1.

Ces mesures sont également réalisées sur des bouchons de la pièce témoin non traitée par le procédé de l'invention.

De la même manière que pour l'exemple 1, les résultats relatifs à l'efficacité de nettoyage sont donnés sur la figure 2 ; tandis que les résultats relatifs à la tenue mécanique des bouchons tubés dans les pièces (planches) sont donnés sur la figure 3 et sont également mentionnés dans le Tableau 1.

Tableau 1

| Planches bouillies (B) | | | PC (N/cm$^2$) | Pret (N/cm$^2$) |
|---|---|---|---|---|
| 120 bars, 60°C, 1h, 6,5 kg/h | Essai P1 | Témoin B | 26 | 1,8 |
| | | BP1 | 28 | 1,8 |
| 250 bars, 60°C, 5 h, 10 kg/h | Essai P2 | Témoin B | 26 | 1,8 |
| | | BP2 | 30 | 1,8 |
| Planches non bouillies (AVB) | | | PC (N/cm$^2$) | Pret (N/cm$^2$) |
| 120 bars, 60°C, 1 h, 6,5 kg/h | Essai P1 | Témoin AVB | 29 | 1,6 |
| | | AVBP1 | 26 | 1,7 |
| 250 bars, 60°C, 5 h, 10 kg/h | Essai P2 | Témoin AVB | 29 | 1,6 |
| | | AVBP2 | 27 | 1,9 |
| * PC : Pression de compression<br>Pret : Pression de retour | | | | |

L'analyse des résultats obtenus dans les exemples 1 et 2, en ce qui concerne l'efficacité de nettoyage (figure 2), montre qu'une efficacité très proche de 100 % est obtenue après traitement, selon l'invention, par le $CO_2$ dense, sous pression, que ce soit pour l'extraction du PCP, avec une efficacité allant de 84 à 100 %, ou que ce soit pour l'extraction du TCA qui est de 100 %, dans tous les cas.

Dans l'exemple 1, sur les échantillons non bouillis, l'efficacité s'échelonne entre 84 et 92 % en ce qui concerne l'extraction du PCP soit une tenue résiduelle de 12 à 6 ppb pour une charge initiale de 75 ppb.

L'efficacité obtenue sur l'extraction du TCA est totale et égale à 100 %, ce qui correspond à une teneur résiduelle en TCA inférieure à la limite de détection de la méthode d'analyse mise en oeuvre.

Dans l'exemple 2, sur les échantillons bouillis, l'efficacité d'extraction du PCP s'avère légèrement meilleure et s'échelonne entre 94 et 100 %, ce qui correspond à une teneur résiduelle allant de 3 ppb à une valeur inférieur à la limite de détection de la méthode d'analyse des PCP et TCA et ce, pour des conditions de traitement identiques à celles de l'exemple 1, mais avec une charge initiale plus faible de 50 ppb en PCP et TCA.

L'efficacité d'extraction sur le TCA est totale et de 100 %.

Pour ce qui est des résultats obtenus, en ce qui concerne la tenue mécanique des bouchons tubés dans les pièces (planches) de liège traitées (figure 3), l'ensemble des résultats des exemples 1 et 2 montre une excellente tenue mécanique des pièces de liège traitées par le $CO_2$, selon le procédé de l'invention.

On constate, lors des mesures de pressions de compression PC, une différence qui n'excède pas 5 N/cm$^2$ entre les bouchons tubés dans les pièces témoins non traitées au $CO_2$, comparée à ceux tubés dans les pièces nettoyées

par le $CO_2$.

De plus, la variation affectant la tenue mécanique est du même ordre de grandeur pour les bouchons tubés dans les pièces traitées que celle normalement obtenue sur bouchons tubés dans les pièces témoins, comme le démontrent les valeurs suivantes de la tenue mécanique :

- bouchons tubés dans des pièces témoins non traitées au $CO_2$ :

    27,5 $\pm$ 1,7 N/cm$^2$ (pour n = 4);

- bouchons tubés dans des pièces traitées au $CO_2$ (exemples 1 et 2) :

    27,8 $\pm$ 1,7 N/cm$^2$ (pour n = 4).

De la même manière, on ne constate pas de variation significative sur les résultats obtenus lors de la mesure des pressions de retour Pret où les valeurs obtenues sont de :

    1,7 $\pm$ 0,1 N/cm$^2$ (n = 4) pour les pièces témoins ;

    1,8 $\pm$ 0,1 N/cm$^2$ (n = 4) pour les pièces traitées (exemples 1 et 2).

On constate enfin que la densité du $CO_2$ ne constitue pas un paramètre plus prépondérant que le temps de traitement ou que la charge initiale de composés organiques responsable du goût indésirable (PCP et TCA).

Les résultats présentés ci-dessus montrent que les pièces de liège traitées par le procédé de l'invention sont totalement aptes à subir un emboutissage et/ou à servir pour le bouchage de produits viticoles.

### Exemple 3

Cet exemple montre l'efficacité anti-microbienne du procédé selon l'invention, lorsque de l'eau, en tant que solvant, est ajoutée au fluide dense sous pression.

Des pièces d'un substrat similaire au matériau décrit (liège) sont ainsi traitées par du $CO_2$ dense sous pression, dans lequel a été ajouté de l'eau, à raison de 0,02 % en poids, à une pression de 300 bar et à une température allant de 0 à 60°C.

On détermine la croissance des micro-organismes par le mode opératoire décrit plus haut.

On traite, dans les mêmes conditions, des pièces de substrat (liège) équivalentes, mais sans que de l'eau ne soit ajoutée au fluide dense sous pression et on détermine, de nouveau, la croissance des micro-organismes.

Les résultats obtenus sont regroupés sur la figure 4, qui indique la variation logarithmique de la croissance microbienne obtenue en fonction de la température (en °C) appliquée lors du traitement.

La courbe en trait plein est la courbe relative au traitement par $CO_2$ additionné d'eau, tandis que la courbe en traits pointillés est relative au traitement par $CO_2$ seul, sans addition d'eau.

On constate que le traitement réalisé à l'aide de $CO_2$ dense sous pression induit au maximum une diminution de la croissance microbienne d'un facteur 100, et cela seulement pour une température de traitement de 60°C.

En revanche, cette diminution atteint un facteur 1 million pour une température de 40°C, lorsque le $CO_2$ est associé à de l'eau.

Sans vouloir être lié par une quelconque théorie, il est probable que l'eau, même en faible proportion, en présence de $CO_2$, produit de l'acide carbonique et confère un pH acide au mélange.

L'action conjuguée de la pression et de l'acidité induit alors un effet fortement néfaste à la survie des micro-organismes présents.

## Revendications

1. Procédé de traitement du liège ou d'un matériau à base de liège, dans lequel on met en contact le liège ou ledit matériau à base de liège avec un fluide dense sous pression, à une température de 10 à 120°C et sous une pression de 10 à 600 bars, un cosolvant étant ajouté au fluide dense sous pression à raison de 0,01 à 10 % en poids, ledit fluide étant du dioxyde de carbone et ledit cosolvant étant choisi parmi l'eau et les solutions aqueuses.

2. Procédé selon la revendication 1, dans lequel la mise en contact est réalisé à une température de 40 à 80°C et sous une pression de 100 à 300 bars.

**3.** Procédé selon l'une quelconque des revendications 1 et 2, dans lequel ledit fluide dense sous pression est à l'état supercritique.

**4.** Procédé selon l'une quelconque des revendications 1 et 3, dans lequel on effectue des cycles de compression/décompression.

**5.** Procédé selon la revendication 4, dans lequel lesdits cycles de compression/décompression sont réalisés avec une amplitude de variation de pression de 10 à 100 bars et des intervalles de temps de 10 secondes à quelques minutes, par exemple 10 minutes.

**6.** Procédé selon l'une quelconque des revendications 1 à 5, dans lequel lesdites solutions aqueuses sont des solutions tampons, telles que des solutions tampons de phosphate et/ou d'hydrogénophosphate ; des solutions d'antifongiques et/ou d'antibiotiques, telles que la pénicilline ; des solutions d'antioxydants, telles que des solutions d'acide ascorbique.

**7.** Procédé selon la revendication 6, dans lequel ledit cosolvant est ajouté au fluide sous pression, à raison de 0,02 à 1 % en poids.

**8.** Procédé d'extraction sélective des composés organiques contaminants à partir du liège ou d'un matériau à base de liège, dans lequel ledit matériau est traité par le procédé selon l'une quelconque des revendications 1 à 7.

**9.** Procédé d'extraction sélective selon la revendication 8, dans lequel lesdits composés organiques sont des composés responsables de goûts et/ou odeurs indésirables.

**10.** Procédé d'extraction selon la revendication 9, dans lequel lesdits composés organiques responsables de goûts et/ou odeurs indésirables sont des (poly)chlorophénols et autres composés phénoliques ; et des (poly)chloroanisoles et autres dérivés de l'anisole.

**11.** Procédé selon la revendication 8, dans lequel lesdits composés organiques sont le pentachlorophénol (PCP), le trichloroanisole (TCA) et le tétrachloroanisole (TeCA).

**12.** Procédé de traitement ou d'extraction, selon l'une quelconque des revendications 1 à 11, dans lequel, suite au traitement ou à l'extraction par le fluide dense sous pression, le fluide et les extraits sont séparés par une ou plusieurs étapes et le fluide sous forme gazeuse est recyclé.

**13.** Procédé selon l'une quelconque des revendications 1 à 12, dans lequel le liège ou ledit matériau à base de liège est préalablement ou postérieurement, audit traitement ou à ladite extraction, par le fluide dense sous pression, soumis, en outre, à un traitement mécanique et/ou chimique , plus particulièrement un traitement par de l'eau chaude ou bouillante, communément appelé « traitement de bouillage ».

**14.** Procédé selon l'une quelconque des revendications 1 à 13, dans lequel ledit liège ou ledit matériau à base de liège est mis en forme préalablement ou postérieurement audit traitement ou à ladite extraction par le fluide dense sous pression ; ou préalablement audit traitement mécanique et/ou chimique, éventuel précédant ledit traitement ou ladite extraction par le fluide dense sous pression ; ou postérieurement audit traitement mécanique et/ou chimique éventuel, suivant ledit traitement ou ladite extraction par le fluide dense sous pression.

**15.** Procédé selon la revendication 14, dans lequel le liège ou ledit matériau à base de liège est mis sous la forme de bouchons, planches, plaques.

**16.** Procédé de fabrication de bouchons en liège ou en matériau à base de liège, comprenant au moins une étape de traitement ou d'extraction selon l'une quelconque des revendications 1 à 13.

**Claims**

**1.** Treatment process for cork or a cork-based material in which said cork or said cork-based material is put into contact with a dense fluid under pressure at a temperature of from 10 to 120°C and at a pressure of from 10 to 600 bars, a co-solvent being added to the dense fluid under pressure with a content of 0.01 to 10% by weight, said fluid being carbon dioxide and said co-solvent being chosen from water and aqueous solutions.

2. Process according to claim 1, in which the contact is achieved at a temperature of 40 to 80°C and at a pressure of 100 to 300 bars.

3. Process according to either of claims 1 and 2, in which said dense fluid under pressure is in the super-critical state.

4. Process according to any one of claims 1 and 3, in which compression decompression cycles are carried out.

5. Process according to claim 4, in which said compression / decompression cycles are carried out with an amplitude of the pressure variation from 10 to 100 bars and time intervals varying from 10 seconds to a few minutes, for example 10 minutes.

6. Process according to any one of claims 1 to 5, in which said aqueous solutions are buffer solutions such as buffer solutions of phosphate and / or hydrogenophosphate; fungicide and / or antibiotic solutions such as penicillin; antioxidant solutions such as solutions of ascorbic acid.

7. Process according to claim 6, in which said co-solvent is added to the fluid under pressure with a content of 0.02 to 1% by weight.

8. Process for selective extraction of contaminating organic compounds from cork or a cork-based material, in which said material is treated by the process according to any one of claims 1 to 7.

9. Process for selective extraction according to claim 8, in which said organic compounds are compounds responsible for undesirable tastes and/or smells.

10. Extraction process according to claim 9, in which said organic compounds responsible for the undesirable tastes and / or smells are (poly)chlorophenols and other phenolic compounds; and (poly)chloroanisoles and other derivatives of anisole.

11. Process according to claim 8, in which said organic compounds are pentachlorophenol (PCP), trichloroanisole (TCA) and tetrachloroanisole (TeCA).

12. Treatment or extraction process according to any one of claims I to 11, in which the fluid and the extracts are separated by one or several steps, after the treatment or the extraction by the dense fluid under pressure, and the gaseous fluid is recycled.

13. Process according to any one of claims 1 to 12, in which said cork or said cork-based material is also subjected to a mechanical and / or chemical treatment before or after said treatment or said extraction by the dense fluid under pressure, and particularly treatment by hot or boiling water commonly called a "boiling treatment".

14. Process according to any one of claims 1 to 13, in which said cork or said cork-based material is shaped before or after said treatment or said extraction using the dense fluid under pressure; either earlier than said mechanical and/ or chemical treatment, if any, preceding said treatment or said extraction by the dense fluid under pressure; or later than said mechanical and / or chemical treatment, if any, after said treatment or said extraction by the dense fluid under pressure.

15. Process according to claim 14, in which said cork or said cork-based material is put into the form of bottle corks, boards or sheets.

16. Manufacturing process for bottle corks made of cork or made of a cork-base material, comprising at least one treatment or extraction step according to any one of claims 1 to 13.

**Patentansprüche**

1. Verfahren zur Behandlung von Kork oder eines Materials auf Basis von Kork, bei dem man den Kork oder das Material auf Basis von Kork mit einem unter Druck stehenden dichten Fluid bei einer Temperatur von 10 bis 120°C und unter einem Druck von 10 bis 600 bar in Kontakt bringt, bei dem dem unter Druck stehenden dichten Fluid ein Colösungsmittel in einer Menge von 0,01 bis 10 Gew.-% zugesetzt wird, bei dem das Fluid Kohlendioxid ist, und bei dem das Colösungsmittel aus der Gruppe Wasser und wässrige Lösungen ausgewählt wird.

2. Verfahren nach Anspruch 1, bei dem man das Inkontaktbringen bei einer Temperatur von 40 bis 80°C und unter einem Druck von 100 bis 300 bar durchführt.

3. Verfahren nach einem der Ansprüche 1 und 2, bei dem das unter Druck stehende dichte Fluid im superkritischen Zustand vorliegt.

4. Verfahren nach einem der Ansprüche 1 und 3, bei dem man Kompressions/Dekompressions-Zyklen durchführt.

5. Verfahren nach Anspruch 4, bei dem die Kompressions/Dekompressions-Zyklen mit einer Druckschwankungsamplitude von 10 bis 100 bar für Zeitintervallc von 10 Sekunden bis zu einigen Minuten, beispielsweise für 10 min, durchgeführt werden.

6. Verfahren nach einem der Ansprüche 1 bis 5, bei dem die wässrigen Lösungen Pufferlösungen, beispielsweise Phosphat- und/oder Hydrogenphosphat-Pufferlösungen; Lösungen von Antimykotika und/oder Antibiotika wie Penicillin; Lösungen von Antioxidationsmitteln wie Ascorbinsäure-Lösungen sind.

7. Verfahren nach Anspruch 6, bei dem das Colösungsmittel dem unter Druck stehenden Fluid in einer Menge von 0,02 bis 1 Gew.-% zugesetzt wird.

8. Verfahren zur selektiven Extraktion von verunreinigenden organischen Verbindungen aus Kork oder einem Material auf Basis von Kork, bei dem man das Material unter Anwendung des Verfahrens nach einem der Ansprüche 1 bis 7 behandelt.

9. Verfahren zur selektiven Extraktion nach Anspruch 8, bei dem die organischen Verbindungen Verbindungen sind, die für unerwünschte Geschmäcke und/oder Gerüche verantwortlich kind.

10. Extraktionsverfahren nach Anspruch 9, bei dem die orgarnischen Verbindungen, die für unerwünschte Geschmäcke und/oder Gerüche verantwortlich sind, (Poly)chlorophenole und andere Phenol-Verbindungen sowie (Poly)chloroanisole und andere Anisol-Derivate sind.

11. Verfahren nach Anspruch 8, bei dem die organischen Verbindungen Pentachlorphenol (PCP), Trichloranisol (TCA) und Tetrachloranisol (TeCA) sind.

12. Verfahren zur Behandlung oder Extraktion nach einem der Ansprüche 1 bis 11, bei dem nach der Behandlung oder Extraktion mit dem unter Druck stehenden dichten Fluid das Fluid und die Extrakte in einer oder mehreren Stufen voneinander getrennt werden und das Fluid in gasförmiger Form im Kreislauf zurückgeführt wird.

13. Verfahren nach einem der Ansprüche 1 bis 12, bei dem der Kork oder das Material auf Basis von Kork vor oder nach der Behandlung oder Extraktion mit dem unter Druck stehenden dichten Fluid außerdem einer mechanischen und/oder chemischen Behandlung, insbesondere einer Behandlung mit warmem oder siedendem Wasser, gemeinsam als "Siedebehandlung" bezeichnet, unterworfen wird.

14. Verfahren nach einem der Ansprüche 1 bis 13, bei dem der Kork oder das Material auf Basis von Kork vor oder nach der Behandlung oder Extraktion mit dem unter Druck stehenden dichten Fluid oder vor der mechanischen und/oder chemischen Behandlung, die gegebenenfalls der Behandlung oder Extraktion mit dem unter Druck stehenden dichten Fluid vorausgeht, oder nach der gegebenenfalls durchgeführten mechanischen und/oder chemischen Behandlung, die auf die Behandlung oder Extraktion mit dem unter Druck stehenden dichten Fluid folgt, geformt (verarbeitet) wird.

15. Verfahren nach Anspruch 14, bei dem der Kork oder das Material auf Basis von Kork zu Stopfen, Platten oder Tafeln geformt (verarbeitet) wird

16. Verfahren zur Herstellung von Stopfen aus Kork oder aus einem Material auf Basis von Kork, das mindestens eine Behandlungs- oder Extraktionsstufe nach einem der Ansprüche 1 bis 13 umfasst.

FIG.1

EP 1 216 123 B2

FIG. 2

FIG. 4

EP 1 216 123 B2

Pret (N/cm²)  3  2,5  2  1,5  1  0,5  0

Pièce bouillie
traitée CO₂; 378g/l; 1h

Pièce bouillie
témoin 1 non traitée CO₂

PC (N/cm²)  0  5  10  15  20  25  30

Pret (N/cm²)  3  2,5  2  1,5  1  0,5  0

Pièce bouillie
traitée CO₂; 777g/l; 5h

Pièce bouillie
témoin 1 non traitée CO₂

PC (N/cm²)  0  5  10  15  20  25  30

Pret (N/cm²)  3  2,5  2  1,5  1  0,5  0

Pièce non bouillie
traitée CO₂; 378g/l; 1h

Pièce non bouillie
témoin 2 non traitée CO₂

PC (N/cm²)  0  5  10  15  20  25  30

Pret (N/cm²)  3  2,5  2  1,5  1  0,5  0

Pièce non bouillie
traitée CO₂; 777g/l; 5h

Pièce non bouillie
témoin 2 non traitée CO₂

PC (N/cm²)  0  5  10  15  20  25  30

FIG. 3

# EP 1 216 123 B2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5364475 A
- DE 4223029 A
- WO 9816288 A

**Littérature non-brevet citée dans la description**

- **MIRANDA, Ana M et al.** High-pressure extraction of cork with CO2 and 1,4 dioxane. *Process. Technol. Proc.,* 1996, vol. 12, 417-422
- *chemical abstracts,* 19 Novembre 1979, vol. 91 (21
- *Ann. Fac. Sc. de Marseille,* 1960, vol. 30, 43-54
- **Quercus suber L.** *Wood Sci. Technol.,* 1988, vol. 22 (3), 211-218